# EUROPEAN PATENT SPECIFICATION

(11) **EP 3 317 120 B1**
(45) Date of publication and mention of the grant of the patent: **31.07.2019**
(21) Application number: 16751642.6
(22) Date of filing: 30.06.2016
(51) Int. Cl.: B60B 35/18, B60B 35/16, F16D 65/00, B60B 35/12

(54) **A BRAKE CALIPER CARRYING FLANGE AND WHEEL HUB COMPRISING SAID FLANGE**
BREMSSATTELTRAGENDER FLANSCH UND RADNABE MIT DIESEM FLANSCH
BRIDE PORTANT UN ÉTRIER DE FREIN ET MOYEU DE ROUE COMPRENANT LADITE BRIDE

(30) Priority: 30.06.2015 IT UB20151878
(43) Date of publication of application: 09.05.2018
(73) Proprietor: FPT Industrial S.p.A., 10156 Torino (IT)
(72) Inventor: ROSSIA, Giorgio, 10141 Torino (IT)
(74) Representative: Fiume, Orazio
(86) International application number: PCT/IB2016/053915
(87) International publication number: WO 2017/002052

(56) References cited:
- EP-A1- 1 855 024
- WO-A1-96/26844
- US-A1- 2008 121 070

## Description

### Technical field of the invention

The invention relates to the field of wheel hubs and, in particular, to a hub comprising a particular brake caliper carrying flange.

### Known state of the art

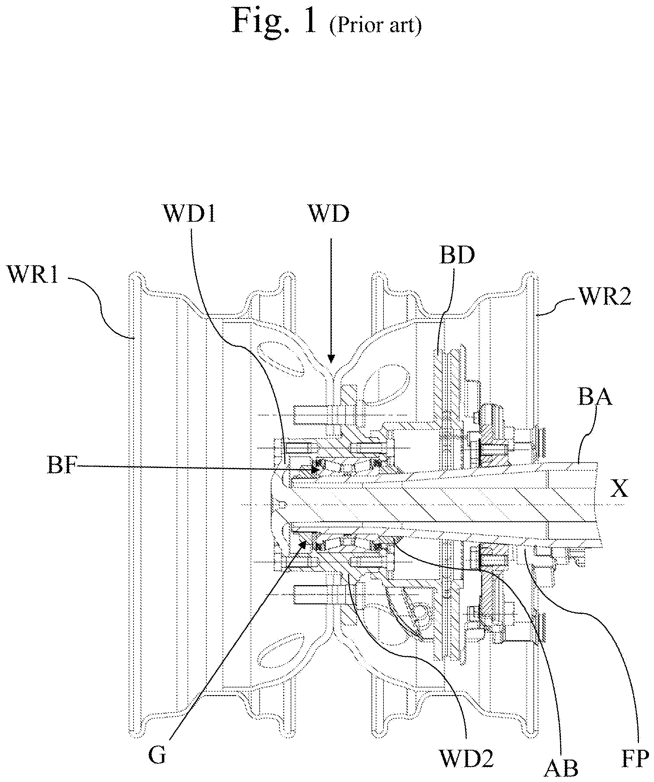

Wheel hubs, see for example figure 1 of the prior art, for twin wheels comprise a generally hollow bridge arm, on which there is fitted, on the outside, a bearing. A ring nut G locks the fixed part of the bearing on the bridge arm against a ring called "abutment ring" AB, which is also fixed, usually by means of welding, on the bridge arm and previously ground with it, so as to offer to the fixed part BF of the bearing an annular surface that is sufficiently plane and perpendicular to the axis of development of the bridge arm.

The wheel disc WD, on which the twin wheels will be fixed, is usually formed by two portions WD1 and WD2 with an axial symmetry, which are joined by means of an axial interface. In this way, the movable part of the bearing remains axially and annularly locked between the two portions of the wheel disc WD1 and WD2.

The brake disc BD is associated with the wheel disc, for example with the inner portion WD2 of the wheel disc, or it can be interposed between the wheel disc and the rims WR1 and WR2 of the twin wheels. This brake disc usually has the shape of a bell, whose opening faces the inner part, i.e. the medial part, of the axle.

The brake caliper carrying flange FP is usually welded in an suitable position on the bridge arm.

This solution is aimed at eliminating one of the twin wheels, though keeping the same layout described above. This means that the brake caliper carrying flange can be moved closer, according to an axial direction, to the wheel bearing: in other words, it can be moved to an outer position relative to the development of the bridge arm.

In order to support the brake caliper, the carrying flange must be shaped like a bell, as well, projecting from the apical fixing point, on the bridge arm, towards the brake disc.

This solution is not deemed to be ideal, especially in terms of weight, torsional stresses ecc.

US2008121070 describes a wheel hub whose features are set forth in the preamble of claim 1.

### Summary of the invention

An object of the invention, starting from the idea of eliminating a twin wheel, though keeping the relative hub layout described above, is to find an improving solution for fixing the brake caliper carrying flange.

A further object of the invention is to possibly reduce the components used to manufacture a wheel hub.

The idea on which the invention is based is that of using one single component to make both the abutment ring for the fixed part of the wheel bearing and the brake caliper carrying flange.

To make things easier, in the description below, said single element will be referred to as "brake caliper carrying flange" or simply "flange", but let's not forget that it is manufactured and positioned so as to both support the brake caliper and act as an abutment ring for the wheel bearing.

The flange allows manufacturers to turn an existing axle for twin wheels into an axle for single wheels.

A further object of the invention is to provide a method to fix said brake caliper carrying flange to the bridge arm.

According to a preferred embodiment of the invention, said brake caliper carrying flange is fixed to the bridge arm by means of welding with the addition of weld material. Preferably, in order to have a sturdy fixing, both faces of the brake caliper carrying flange are fixed to the bridge arm.

Furthermore, instead of grinding the weld material added during the welding procedure, in order to offer an optimal abutment surface for the bearing, the annular part fitted on the bridged is subjected to an axial machining, so as to define at least three axial projections, which project towards the wheel bearing, so that the added weld material is arranged in such a way that it is entirely contained within said projections.

A following grinding procedure of the abutment ring built-in in the brake caliper carrying flange exclusively involves said axial projections.

According to the invention, there is provided a brake caliper carrying flange according to claim 1.

According to the invention, there is also provided a wheel hub comprising said brake caliper carrying flange.

Finally, according to the invention, there is provided a terrestrial vehicle comprising the aforesaid wheel hub.

We would like to point out that the assembly of two opposite hubs corresponds to the assembly of a vehicle axle.

The claims describe preferred embodiments of the invention, thus forming an integral part of the description.

### Brief description of the figures

Further objects and advantages of the invention will be best understood upon perusal of the following detailed description of an embodiment thereof (and of relative variants) with reference to the accompanying drawings merely showing non-limiting examples, wherein:
figure 1 shows an axial section of a wheel hub for twin wheels according to the prior art;
figure 2 shows an axial section of a wheel hub implementing, according to the invention, the brake caliper carrying flange according to the invention,
figure 2a shows an enlargement of a portion of figure 2 to highlight aspects linked to the assembly of the wheel hub according to the invention,
figure 3 shows a perspective view of the brake caliper carrying flange.
In the figures, the same numbers and the same reference letters indicate the same elements or components.
We would like to point out that the components shared by the known solution shown in figure 1 and the solution of the invention are indicated with same numbers and letters, so as to stress the fact that the invention deals with an evolution to single wheels of a twin-wheels bridge arm.
For the purposes of the invention, the term "second" component does not imply the presence of a "first" component. As a matter of fact, these terms are only used for greater clarity and should not be interpreted in a limiting manner.

### Detailed description of embodiments

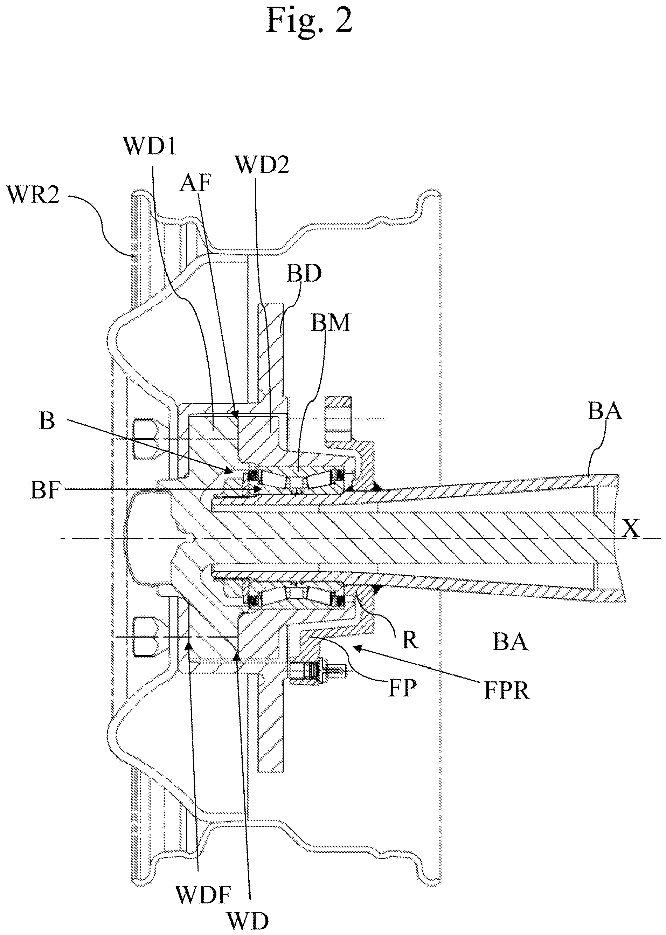

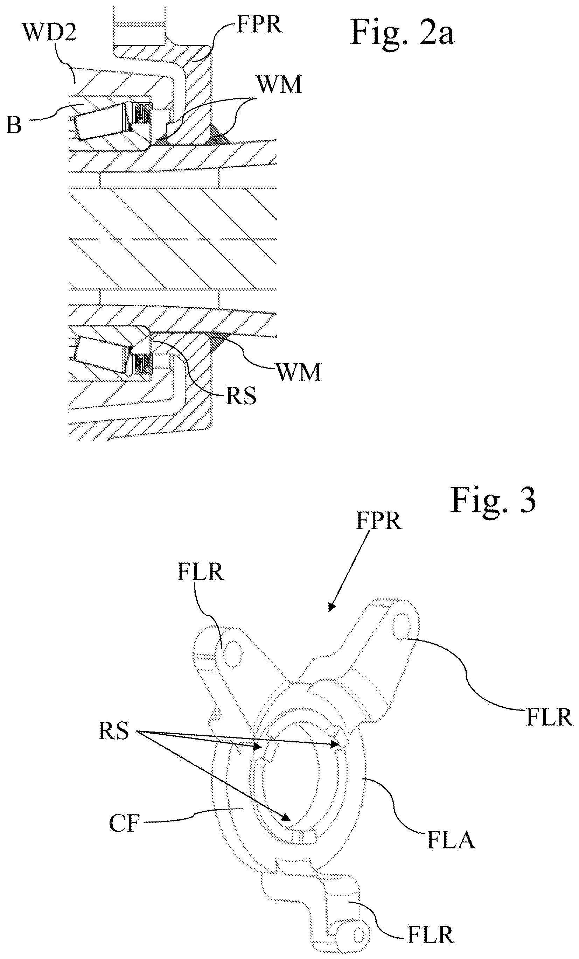

Figure 2 shows an axial section of a wheel hub "with twin wheels", in which one single wheel is implemented for each side of the axle.

The bridge arm BA has a tubular, elongated shape, axially symmetrical relative to the axis X.

A bearing B is fitted on the bridge arm, with the relative fixed part BF axially locked between the ring nut G and the abutment ring R.

The movable part BM of the bearing B is axially and annularly locked between the two axial portions WD1 and WD2 of the wheel disc WD, as described above. In other words, the wheel disc WD is axially fitted on the outside of the mobile part BM of the bearing B.

The wheel disc WD, on which one single wheel WR2 will be fixed, is formed by two portions with an axial symmetry, which are joined by means of an axial interface AF.

The outer axial face WDF of the wheel disc represents the interface to which the brake disc DB and the wheel WR2 are connected. In particular, between the wheel disc and the wheel rim WR2 the brake disc BD' is interposed.

Unlike the implementation for twin wheels, the brake disc BD is preferably connected to the outer axial portion WD1, which is the closest to the free end of the bridge arm BA. It should be clear that, in order to optimize costs, manufacturers can keep implementing the same brake disc BD shown in figure 1 of the prior art, though this would lead to a flange FPR with the relative radial expansions FLR projecting inwards (and not outwards, as shown in figure 2), namely towards the medial part of the bridge arm. According to the invention, the abutment ring R is made as one single piece together with the brake caliper carrying flange FP, which defines, as the same time, an abutment ring and a brake caliper carrying flange. For this reason it is indicated with FPR (FP+R).
Said flange FL, obtained in one single piece by forging or moulding and subsequent mechanical finishing machining, comprises an axial part FLA, which is substantially plane, and one or more radial expansions FLR.

The axial part FLA defines the abutment ring R described above, whereas the radial part defines the support for the brake caliper and for possible further components, such as for example the ABS sensor and/or the plate protecting the brake disc (not shown).

The axial part FLA has an axial symmetry with a central hole, so as to be fitted on the bridge arm BA.

The radial part FLR, besides projecting radially, can also project according to the symmetry axis X of the axial part FLA, so as to protrude outwards towards the brake disc BD, so that, in the assembled operating condition of the flange FPR, the radial part slightly projects towards the brake disc, so as to move the fixing point of the relative caliper closer to it.

According to a method for the assembly of the bridge arm and, hence, of the wheel hub, the flange is welded on both the opposite axial faces of the relative axial part FLA and, subsequently, the contact face CF, which is the one intended to create the abutment surface for the fixed part BF of the bearing B, is ground, for example using a lathe.

According to a preferred embodiment of the invention, said contact face CF comprises three or more axial projections RS, preferably angularly evenly distributed.

The procedure used to weld the contact face CF to the bridge arm BA comprises adding material WM in the gap defined by two angularly consecutive projections RS. In this way, advantageously, the following grinding procedure only involves the projections RS.

Therefore, the presence of the projections allows manufacturers to avoid having to carry out a grinding procedure on the added weld material WM, which notoriously has physical and homogeneity features that make it harder to be processed compared to the properties of the material used to manufacture the flange FPR.

## Claims

1. A motor vehicle wheel hub, the wheel hub comprising:
- a bridge arm (BA) of a tubular shape;
- a bearing (B) annularly fitted on the outside of said bridge arm (BA);
- an abutment ring (R) defining an axial abutment face (CF) for said bearing (B); and
- a brake caliper carrying flange (FP),
wherein said abutment ring and said brake caliper carrying flange are made of a single piece (FPR)
**characterized in that** it comprises an axial part (FLA), which is substantially plane and comprises a central hole, for being fitted on the bridge arm (BA), and at least one radial part (FLR) for supporting a brake caliper.

2. A hub according to claim 1, obtained by forging or casting and subsequent machining.

3. A hub according to claim 1, wherein said at least one radial part (FLR) has an axial component projecting externally, i.e., in a direction concordant with an abutment face (CF) or else opposite to said abutment face (CF) .

4. A hub according to claim 3, wherein said axial component of said radial part (FLR) is such as to define a fixing point of a corresponding brake caliper.

5. A hub according to any one of claims 1 to 4, wherein said axial part (FLA) comprises at least three axial projections (RS), which are designed to project towards the wheel bearing (B) in assembly operating conditions.

6. A hub according to claim 5, wherein said axial projections are angularly evenly distributed.

7. A method for assembly of a motor vehicle wheel hub according to claim 1, comprising the following steps:
- fitting of said brake caliper carrying flange described in any one of claims 1 to 5 on a corresponding bridge arm (BA) ;
- welding of the abutting face (CF) intended to face a wheel bearing (B) to said bridge arm,
wherein the material added by welding is angularly and axially contained between the projections (RS) of said abutment face(CF),
- axial grinding of said abutment face (CF), limitedly to the projections (RS) alone.

8. An industrial or commercial vehicle comprising an axle having only one wheel for each side, wherein a corresponding wheel hub is in accordance with claim 1.

## Patentansprüche

1. Kraftfahrzeugradnabe, wobei die Radnabe Folgendes umfasst:
- einen Brückenarm (BA) in Röhrenform;
- ein Lager (B), das ringförmig an der Außenseite des Brückenarms (BA) angebracht ist;
- einen Anschlagring (R), der eine axiale Anschlagfläche (CF) für das Lager (B) definiert; und
- einen Bremssattelträgerflansch (FP), wobei
der Anschlagring und der Bremssattelträgerflansch einteilig (FPR) hergestellt sind,
**gekennzeichnet durch** einen Axialteil (FLA), der im Wesentlichen eben ist und eine Mittelbohrung umfasst, um auf den Brückenarm (BA) angebracht zu werden, und mindestens einen Radialteil (FLR), um einen Bremssattel zu tragen.

2. Nabe nach Anspruch 1, die durch Schmieden oder Gießen und anschließende Bearbeitung erhalten wird.

3. Nabe nach Anspruch 1, wobei der mindestens eine Radialteil (FLR) eine Axialkomponente besitzt, die nach außen, d. h. in eine Richtung, die mit einer Anschlagfläche (CF) übereinstimmt, oder sonst gegenüber der Anschlagfläche (CF), vorsteht.

4. Nabe nach Anspruch 3, wobei die Axialkomponente des Radialteils (FLR) derart gestaltet ist, dass sie einen Befestigungspunkt eines entsprechenden Bremssattels definiert.

5. Nabe nach einem der Ansprüche 1 bis 4, wobei der Axialteil (FLA) mindestens drei axiale Vorsprünge (RS) umfasst, die ausgelegt sind, im Montagebetriebszustand zum Radlager (B) vorzustehen.

6. Nabe nach Anspruch 5, wobei die axialen Vorsprünge in Winkelrichtung gleichmäßig verteilt sind.

7. Verfahren zur Montage einer Kraftfahrzeugradnabe nach Anspruch 1, das die folgenden Schritte umfasst:
- Aufsetzen des Bremssattelträgerflanschs, der in einem der Ansprüche 1 bis 5 beschrieben ist, auf einen entsprechenden Brückenarm (BA);
- Schweißen der Anschlagfläche (CF), die einem Radlager (B) zugewandt sein soll, an den Brückenarm, wobei
das Material, das durch das Schweißen hinzugefügt wird, in Winkelrichtung und axial zwischen den Vorsprüngen (RS) der Anschlagfläche (CF) enthalten ist, und
- Axialschleifen der Anschlagfläche (CF), begrenzt auf lediglich die Vorsprünge (RS).

8. Industrie- oder Nutzfahrzeug, das eine Achse umfasst, die lediglich ein Rad für jede Seite besitzt, wobei eine entsprechende Radnabe in Übereinstimmung mit Anspruch 1 ist.

## Revendications

1. Moyeu de roue de véhicule à moteur, le moyeu de roue comprenant :
- un bras de pont (BA) de forme tubulaire ;
- un palier (B) monté de manière annulaire à l'extérieur dudit bras de pont (BA) ;
- une bague de butée (R) définissant une face de butée axiale (CF) pour ledit palier (B) ; et
- une bride de support d'étrier de frein (FP),
dans lequel ladite bague de butée et ladite bride de support d'étrier de frein sont réalisées d'un seul tenant (FPR),
**caractérisé en ce qu'**il comprend une partie axiale (FLA) qui est sensiblement plane et comprend un trou central pour être installée sur le bras de pont (BA), et au moins une partie radiale (FLR) pour supporter un étrier de frein.

2. Moyeu selon la revendication 1, obtenu par forgeage ou moulage et usinage consécutif.

3. Moyeu selon la revendication 1, dans lequel ladite au moins une partie radiale (FLR) a un composant axial faisant saillie extérieurement, c'est-à-dire dans une direction concordante avec une face de butée (CF) ou sinon opposée à ladite face de butée (CF).

4. Moyeu selon la revendication 3, dans lequel ledit composant axial de ladite partie radiale (FLR) est tel qu'il définit un point de fixation d'un étrier de frein correspondant.

5. Moyeu selon l'une quelconque des revendications 1 à 4, dans lequel ladite partie axiale (FLA) comprend au moins trois saillies axiales (RS) qui sont conçues pour faire saillie vers le palier de roue (B) dans des conditions d'assemblage.

6. Moyeu selon la revendication 5, dans lequel lesdites saillies axiales sont réparties de manière angulairement régulière.

7. Procédé pour assembler un moyeu de roue de véhicule à moteur selon la revendication 1, comprenant les étapes suivantes :
- monter ladite bride de support d'étrier de frein décrite dans l'une quelconque des revendications 1 à 5 sur un bras de pont (BA) correspondant ;
- souder la face de butée (CF) prévue pour faire face à un palier de roue (B), sur ledit bras de pont,
dans lequel le matériau ajouté par soudage, est contenu de manière angulaire et axiale entre les saillies (RS) de ladite face de butée (CF),
- meuler axialement ladite face de butée (CF), de manière limitée aux saillies (RS) seules.

8. Véhicule industriel ou commercial comprenant un essieu ayant une seule roue pour chaque côté, dans lequel un moyeu de roue correspondant est selon la revendication 1.
